# EUROPÄISCHE PATENTANMELDUNG

(11) **EP 2 562 845 A1**
(43) Veröffentlichungstag der Anmeldung: **27.02.2013**
(21) Anmeldenummer: 12181139.2
(22) Anmeldetag: 21.08.2012
(51) Int. Cl.: H01M 2/10, H01M 10/50

(54) **Energiespeichervorrichtung für ein Kraftfahrzeug**

(30) Priorität: 23.08.2011 DE 102011081393
(71) Anmelder: Continental Automotive GmbH, 30165 Hannover (DE)
(72) Erfinder: Schweiger, Hans-Georg, Prof., 85057 Ingolstadt (DE); Bünnig, Michael, 10439 Berlin (DE); Bayer, Ralf, 10365 Berlin (DE); Birke, Peter, 16548 Glienicke / Nordbahn (DE)

(57) **Zusammenfassung**

Die vorliegende Erfindung betrifft eine Energiespeichervorrichtung (1) für ein Kraftfahrzeug. Die Energiespeichervorrichtung (1) weist einen Energiespeicher (20) mit Kühlfinnen (21) und ein einteiliges Biegeteil (10) auf. Das Biegeteil (10) ist als Behälter zur Aufnahme des Energiespeichers (20) ausgebildet. Das Biegeteil (10) weist Aussparungen (11) auf, durch welche die Kühlfinnen (21) hindurchgeführt werden können. Das Biegeteil (10) weist ferner eine Öffnung (12) auf, durch welche ein Einschieben des Energiespeichers (20) in das Biegeteil (10) ermöglicht wird. Der Energiespeicher (20) ist in dem Biegeteil (10) angeordnet und die Kühlfinnen (21) sind durch die Aussparungen (11) hindurchgeführt.

## Beschreibung

Die vorliegende Erfindung betrifft eine Energiespeichervorrichtung für ein Kraftfahrzeug.

Als Hybrid- bzw. Elektrofahrzeuge bezeichnet man Kraftfahrzeuge, die teilweise bzw. ausschließlich durch elektrische Energie angetrieben werden. Kraftfahrzeuge mit Hybridantrieb weisen beispielsweise eine Brennkraftmaschine, eine elektrische Maschine und eine elektrochemische und/oder elektrostatische Energiespeichervorrichtung auf.

Die elektrische Maschine des Hybridfahrzeuges fungiert in der Regel als Starter/Generator oder als elektrischer Antrieb. In der Funktion als Starter/Generator wird sie zum Anlassen der Brennkraftmaschine verwendet und ersetzt den normalerweise vorhandenen Anlasser und die Lichtmaschine. Bei einer Ausführung als elektrischer Antrieb wird sie zusammen mit der Brennkraftmaschine oder alleine zum Antrieb des Kraftfahrzeugs verwendet. Im Generatorbetrieb ermöglicht sie eine Rekuperation von kinetischer Energie zur Versorgung des Bordnetzes mit elektrischer Energie und zum Aufladen eines Energiespeichers.

Beiden Fahrzeugtypen - Hybrid- und Elektrofahrzeug - ist gemein, dass große Mengen elektrischer Energie durch die Energiespeichervorrichtung bereitgestellt werden müssen. Die Energiespeichervorrichtung weist hierzu eine oder mehrere Energiespeicher (elektrochemisch und/oder elektrostatisch) auf, welche elektrische Energie speichern können. Als elektrochemische Energiespeicher werden vorzugsweise Nickel-Metallhydrid Zellen oder Lithium-Ionen Zellen verwendet. Daneben kommen auch elektrostatische Energiespeicher zum Einsatz, beispielsweise Doppelschichtkondensatoren oder Lithium-Kondensatoren.

Im Betrieb erzeugen die Energiespeicher Abwärme, welche durch Kühlfinnen abgeführt werden, um eine Überhitzung des Energiespeichers zu verhindern.

Zum Schutz vor äußeren Einflüssen ist der Energiespeicher ferner in einem Gehäuse untergebracht.

Es ist die Aufgabe der vorliegenden Erfindung eine Energiespeichervorrichtung bereitzustellen, welche kostengünstig herstellbar ist und eine effektive Kühlung aufweist.

Die Aufgabe wird gelöst durch eine Energiespeichervorrichtung gemäß den unabhängigen Patentansprüchen. Vorteilhafte Ausgestaltungen der Erfindung sind Gegenstand der abhängigen Ansprüche.

Eine Energiespeichervorrichtung für ein Kraftfahrzeug gemäß dem Anspruch 1 weist einen Energiespeicher mit Kühlfinnen und ein einteiliges Biegeteil auf. Das Biegeteil ist als Behälter zur Aufnahme des Energiespeichers ausgebildet. Das Biegeteil weist Aussparungen auf, durch welche die Kühlfinnen hindurchgeführt werden können. Das Biegeteil weist ferner eine Öffnung auf, durch welche ein Einschieben des Energiespeichers in das Biegeteil ermöglicht wird. Der Energiespeicher ist in dem Biegeteil angeordnet und die Kühlfinnen sind durch die Aussparungen hindurchgeführt.

Das einteilige Biegeteil besteht aus einem biegbaren, einteiligen Formteil (bspw. Blech) welches mittels eines Biegeprozesses (bspw. Schwenkbiegen) zu einem Behälter geformt wurde. Der Behälter weist zumindest fünf Begrenzungsflächen auf (bspw. einen Boden und vier Seitenwände) und ist derart ausgebildet, dass er den Energiespeicher bevorzugt vollständig aufnehmen kann.

Die Öffnung resultiert bevorzugt aus einer fehlenden Begrenzungsfläche des Biegeteils (bspw. Behälter ohne Deckel). Die Öffnung kann jedoch auch eine weitere Aussparung in einer der Begrenzungsflächen des Biegeteils sein.

Die Aussparungen können bevorzugt vor dem Biegeprozess in das Biegeteil eingebracht werden (bspw. durch Ausstanzung). In bevorzugter Weise sind die Aussparungen derart ausgebildet, dass sie ein passgenaues Hindurchführen der Kühlfinnen ermöglichen.

Die Kühlfinnen können Wärme, welche beim Betrieb des Energiespeichers entsteht, von dem Energiespeicher abführen und hierdurch den Energiespeicher kühlen.

Der Energiespeicher ist in dem Biegeteil angeordnet, wobei die Kühlfinnen durch die Aussparungen hindurchgeführt sind und damit zumindest teilweise außerhalb des Biegeteils angeordnet sind.

Die Vorteile der vorliegenden Erfindung ergeben sich daraus, dass das Biegeteil ein kostengünstig herstellbares Gehäuse für den Energiespeicher darstellt. Ferner kann der Energiespeicher in einfacher Weise in das Biegeteil eingeschoben werden, wodurch der Herstellungsprozess der Energiespeichervorrichtung deutlich vereinfacht werden kann. Gleichzeitig erlaubt das Biegeteil eine effektive und kostengünstige Kühlung des Energiespeichers, indem die Kühlfinnen durch die Aussparungen hindurchgeführt sind. Die vorliegende Erfindung ermöglicht somit die Herstellung einer kostengünstigen Energiespeichervorrichtung mit einer effektiven Kühlung.

In einer Ausgestaltung der Energiespeichervorrichtung nach Anspruch 2 sind die Aussparungen derart ausgebildet, dass diese eine Führung für die Kühlfinnen bei dem Einschieben des Energiespeichers in das Biegeteil bilden.

Durch die Führung können bei der Herstellung der Energiespeichervorrichtung einfachere Fertigungsmaschinen (mit einfacheren Positionierungsfertigkeiten) verwendet werden. Hierdurch kann der Herstellungsprozess der Energiespeichervorrichtung weiter vereinfacht und somit die Kosten der Energiespeichervorrichtung weiter gesenkt werden.

In einer Ausgestaltung der Energiespeichervorrichtung nach Anspruch 3 weisen die Aussparungen zumindest teilweise eine Sägezahnform auf.

Die Aussparungen weisen bevorzugt entlang ihrer Längsseiten teilweise eine Sägezahnform auf. Eine Sägezahnform ist eine unsymmetrische Dreiecksschwingung, mit Erhebungen, welche in die Aussparung hineinragen, und Vertiefungen, welche in das Biegeteil hineinragen. Die Aussparungen können jedoch auch eine symmetrische Dreiecksform oder eine Wellenform aufweisen. Alle diese Formen ermöglichen es, dass die Aussparungen bevorzugt mit ihren Erhebungen in Kontakt mit den Kühlfinnen treten.

In vorteilhafter Weise kann durch die Sägezahnform die Kontaktfläche zwischen den Kühlfinnen und den Aussparungen verringert werden. Dies kann die Reibung zwischen den Aussparungen und den Kühlfinnen beim Einschieben des Energiespeichers in das Biegeteil verringern. Zur weiteren Verringerung der Reibung können die Erhebungen zusätzlich abgerundet werden. Das Einschieben des Energiespeichers in das Biegeteil wird dadurch erleichtert, wodurch der Fertigungsprozess weiter vereinfacht werden kann. Dies kann die Kosten der Energiespeichervorrichtung weiter senken.

In vorteilhafter Weise kann durch die Sägezahnform auch ein Kraftschluss zwischen den Aussparungen und den Kühlfinnen verstärkt werden. Dies ist insbesondere dann der Fall, wenn der Abstand zwischen den gegenüberliegenden Erhebungen einer Aussparung der Kühlfinnendicke entspricht, so dass die Erhebungen beidseitig in Kontakt mit der Kühlfinne stehen. Bei Verkleinerung des Abstands der gegenüberliegenden Erhebungen können ferner die Erhebungen zumindest geringfügig in die Kühlfinnen hineindrücken, wodurch die Aussparungen auch formschlüssig mit den Kühlfinnen in Kontakt stehen. Durch den kraftschlüssigen, bzw. formschlüssigen Kontakt können die Kühlfinnen und die daran angeordneten Energiespeicher in dem Biegeteil fixiert werden. Eine zusätzliche Fixierung des Energiespeichers mit dem Biegeteil kann dadurch eingespart werden. Dies kann die Kosten der Energiespeichervorrichtung weiter senken.

Die Sägezahnform kann ferner derart ausgestaltet sein, dass die Erhebungen eine federnde Wirkung aufweisen. Hierdurch kann der Energiespeicher zumindest parallel zu der Flächennormale der Erhebungen federnd gelagert werden. Auf eine konventionelle Federung der Energiespeichervorrichtung kann in diesem Fall zumindest teilweise verzichtet werden. Dies kann die Kosten der Energiespeichervorrichtung weiter senken.

In einer Ausgestaltung der Energiespeichervorrichtung nach Anspruch 4 ist der Energiespeicher derart ausgebildet, dass er die Öffnung verschließt.

Gemäß dieser Ausgestaltung kann der Energiespeicher gleichzeitig als Deckel für das Biegeteil angesehen werden. Insbesondere kann der Energiespeicher mit einer seiner Außenwände die Öffnung verschließen. Diese Außenwand kann ferner verstärkt ausgeführt sein (bspw. mit einem Blech).

Da der Energiespeicher die Öffnung direkt nach dem Einschieben in das Biegeteil automatisch verschließt, kann auf einen eigenständigen Fertigungsschritt zum Verschließen der Öffnung verzichtet werden. Hierdurch wird der Fertigungsprozess weiter vereinfacht, wodurch die Kosten der Energiespeichervorrichtung weiter gesenkt werden können.

In folgendem wird die Erfindung anhand von Ausführungsbeispielen mit Bezug auf die beigefügten Figuren näher erläutert. In den Figuren sind gezeigt:
Figur 1 eine schematische Darstellung eines biegbaren Formteils;
Figur 2a eine schematische Darstellung eines Biegeteils und eines Energiespeichers mit Kühlfinnen;
Figur 2b eine schematische Darstellung einer Energiespeichervorrichtung mit einem Energiespeicher mit Kühlfinnen und einem einteiligem Biegeteil.

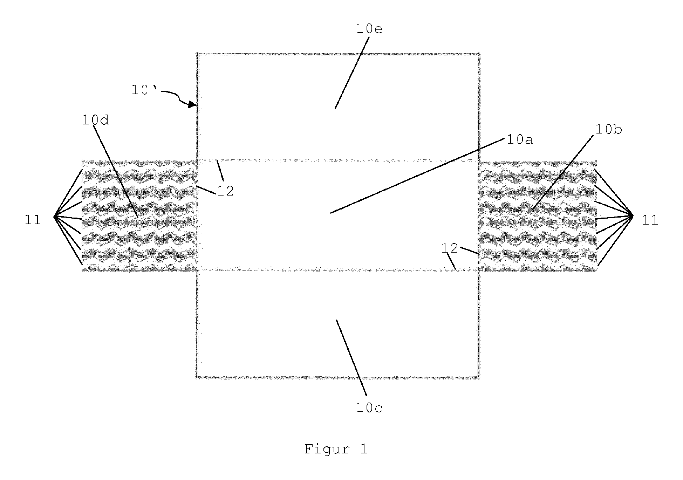

Figur 1 zeigt schematisch ein einteiliges Formteil 10', welches durch einen Biegeprozess zu einem einteiligen Biegeteil 10 geformt werden kann.

Das Formteil 10' weist eine Kreuzform auf und kann in eine Zentralfläche 10a und vier daran anschließenden Schenkelflächen 10b, 10c, 10d und 10e gegliedert werden. Der Übergang zwischen der Zentralfläche 10a und den Schenkelflächen 10b, 10c, 10d und 10e ist in Figur 1 mit jeweils einer gestrichelten Biegelinie 12 symbolisiert. Die Biegelinien 12 symbolisieren zugleich den Biegebereich des Formteils 10' beim dem Biegeprozess.

Zwei sich gegenüberliegende Schenkelflächen 10b und 10d weisen eine Vielzahl von länglichen Aussparungen 11 auf.

Die Schenkelflächen 10b und 10d werden dabei von den Aussparungen 11 durchbrochen. Die Aussparungen 11 sind jeweils derart ausgebildet, dass beispielsweise eine Kühlfinne 21 eingeschoben werden kann.

Die Aussparungen 11 können wie in Figur 1 gezeigt eine Sägezahnform aufweisen. Die Aussparungen 11 können jedoch auch eine geradlinige Form aufweisen.

Die Aussparungen 11 werden vorteilhafterweise durch einen Ausstanzvorgang aus dem Formteil 10' herausgetrennt.

Das Formteil 10' besteht aus einem biegbaren Material, vorteilhafterweise aus einem dünnen Blech (bspw. mit einer Stärke von 2 bis 3 mm).

Zur Herstellung des Biegeteils 10 können die Schenkelflächen 10b, 10c, 10d und 10e des Formteils 10' entlang der Biegelinien 12 gegenüber der Zentralfläche 10a mit einem Winkel von 90 Grad jeweils in dieselbe Richtung gebogen werden.

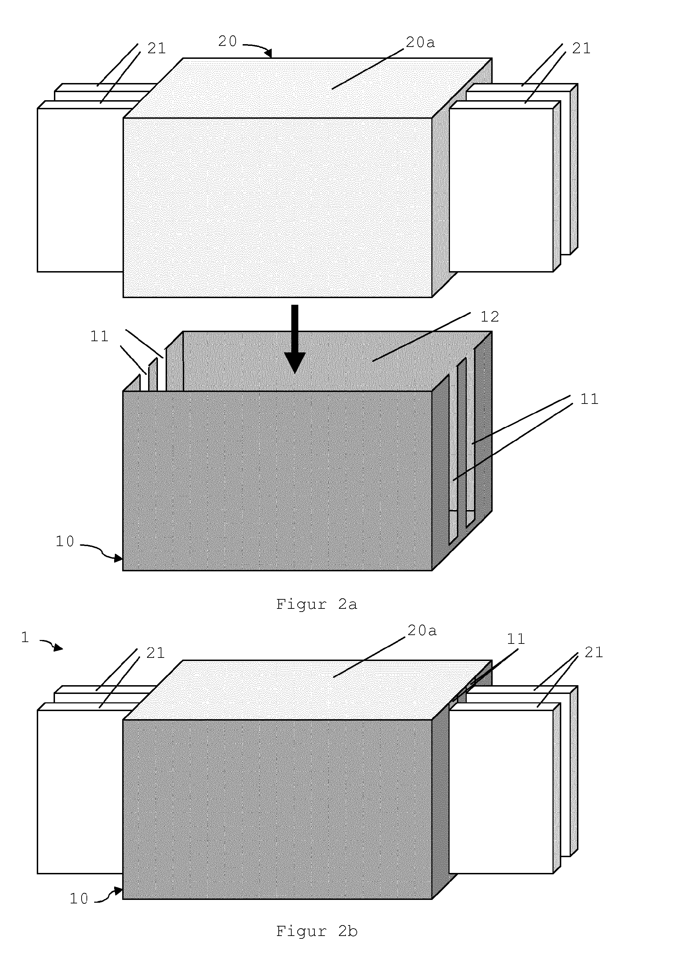

Nach dem Biegeprozess bilden die Zentralfläche 10a den Boden und die vier Schenkelflächen 10b, 10c, 10d und 10e, die vier Seitenwände eines quaderförmigen Behälters, wie er schematisch in Figur 2 dargestellt ist. Im Folgenden wird daher das Biegeteil 10 auch als Behälter 10 bezeichnet. Zur Abdichtung oder Versteifung des Behälters 10 können die aneinander angrenzenden Seitenwände (10b, 10c, 10d und 10e) miteinander verschweißt, verlötet oder verklebt sein.

Die Figuren 2a und 2b zeigen schematisch eine Energiespeichervorrichtung 1 mit einem einteiligen Behälter 10 und einen Energiespeicher 20 gemäß der vorliegenden Erfindung, wobei Figur 2a die Energiespeichervorrichtung 1 vor dem Einschieben des Energiespeichers 20 in den Behälter 10 zeigt.

In Figur 2a ist der Energiespeicher 20 schematisch als Quader dargestellt. Der Energiespeicher 20 kann jedoch auch eine beliebige andere Form aufweisen.

Ferner weist der Energiespeicher 20 an zwei gegenüberliegenden Außenseiten jeweils mehrere Kühlfinnen 21 auf.

Bei dem Energiespeicher 20 handelt es sich um einen Verbund aus einem oder mehreren elektrochemischen und/oder elektrostatischen Energiespeicherzellen, insbesondere Lithium-Ionen Zellen, Nickel-Metallhydrid Zellen, Bleibatterien und/oder Doppelschichtkondensatoren.

Die Kühlfinnen 21 weisen bevorzugt eine längliche, dünne Form auf und verlaufen bevorzugt parallel zueinander.

Die Kühlfinnen 21 sind mit dem Energiespeicher 20 derart gekoppelt, dass die Kühlfinnen 21 Wärmeenergie, welche beim Betrieb des Energiespeichers 20 entsteht, aus dem Inneren des Energiespeichers 20 nach außen ableiten und so den Energiespeicher 20 kühlen können.

Der Behälter 10 ist derart ausgebildet, dass der Energiespeicher 20 mit den Kühlfinnen 21 bevorzugt vollständig in den Behälter 10 eingeschoben werden kann. Hierzu weist der Behälter 10 eine Öffnung 12 auf, durch welche ein Einschieben des Energiespeichers 20 in den Behälter 10 ermöglicht wird.

Der Behälter 10 weist bevorzugt für jede Kühlfinne 21 jeweils eine Aussparung 11 auf, so dass jede Kühlfinne 21 durch jeweils eine der Aussparungen 11 hindurchgeführt werden kann. Der Behälter 10 kann jedoch auch derart ausgebildet sein, dass mehrere Kühlfinnen 21 durch jeweils eine Aussparung 11 hindurchgeführt werden können.

In bevorzugter Weise sind die Aussparungen 11 derart ausgebildet, dass beim Einschieben des Energiespeichers 20 zumindest eine Seite der Aussparungen 11 an jeweils einer der Kühlfinnen 21 anliegt, so dass die Aussparungen 11 beim Einschieben des Energiespeichers 20 in den Behälter 10 eine Führung für die Kühlfinnen 21 bilden.

Die Aussparungen 11 können ferner derart ausgebildet sein, das nach dem Einschieben des Energiespeichers 20 in den Behälter 10 die Aussparungen 11 mit den Kühlfinnen 21 eine formschlüssige und/oder kraftschlüssige Verbindung eingehen. Diese Verbindung kann ein selbsttätiges Herausschieben des Energiespeichers 20 aus dem Behälter 10 verhindern, bzw. zumindest erschweren.

Für eine kraftschlüssige Verbindung können die Aussparungen 11 beispielsweise derart ausgebildet sein, dass sie beidseitig in engen Kontakt mit den Kühlfinnen 21 stehen.

Für eine formschlüssige Verbindung können die Aussparungen 11 beispielsweise - wie in Figur 1 gezeigt - eine Sägezahnform aufweisen, wobei sich die Erhebungen der Sägezahnform zumindest geringfügig in die Kühlfinnen eindrücken können.

Die Aussparungen 11 können auch derart ausgebildet sein, dass sie mit den Kühlfinnen 21 über einen Mechanismus eine formschlüssige Verbindung eingehen (beispielsweise ein in der Aussparung 11 ausgebildetes Federelement, welches in eine Vertiefung der Kühlfinne einrasten kann).

Figur 2b zeigt eine Energiespeichervorrichtung 1 bestehend aus den in Figur 2a gezeigten Komponenten: dem Energiespeicher 20, den Kühlfinnen 21 und dem einteiligen Behälter 10.

Der Energiespeicher 20 wurde vollständig mit den Kühlfinnen 21 in den Behälter 10 eingeschoben.

Der Energiespeicher 20 ist bevorzugt passgenau in dem Behälter 10 angeordnet. Der Behälter 10 kann so den Energiespeicher 20 vor äußeren Einflüssen (bspw. mechanische Stöße, elektromagnetische Strahlung, Feuchtigkeit, Temperatur) schützen. Gleichzeitig wird eine kleine Bauform der Energiespeichervorrichtung 1 erreicht.

Der Energiespeicher 20 verschließt mit einer Außenseite 20a die Öffnung 12 des Behälters 10. Die Außenseite 20a wird deshalb im Folgenden als Deckel 20a bezeichnet. Der Deckel 20a ist bevorzugt derart ausgebildet, dass dieser vollständig im Behälter 10 angeordnet ist und passgenau mit der Oberseite des Behälters 10 abschließt. Der Deckel 20a kann jedoch auch außerhalb des Behälters angeordnet sein, beispielsweise indem der Deckel 20a eine Umrahmung aufweist, welche den Behälter 10 umfasst und dadurch abschließt. Der Deckel 20a kann aus dem gleichen Material wie der Behälter 10 bestehen.

Die Kühlfinnen 21 sind durch die Aussparungen 11 hindurchgeführt.

Die Aussparungen 21 stehen in Längsrichtung in direktem Kontakt mit den Kühlfinnen 21 und können so über einen Kraftschluss den Energiespeicher 20 mit den Kühlfinnen 21 fixieren.

Die Kühlfinnen 21 können die Wärme, welche beim Betrieb des Energiespeichers 20 entsteht, von dem Energiespeicher 20 zur Außenseite des Behälters 10 abführen.

Der Behälter 10 schützt somit den Energiespeicher 20 und ermöglicht gleichzeitig eine effektive Kühlung des Energiespeichers 20 über die Kühlfinnen 21. Besonders vorteilhaft ist ferner, dass der Behälter 10 in einfacher Weise aus einem einteiligen Formteil 10' herstellbar ist und der Energiespeicher 20 mit einfachen Fertigungsmitteln in der Behälter 10 einsetzbar ist.

Im Folgenden soll ein Verfahren zum Herstellen der erfindungsgemäßen Energiespeichereinrichtung 1 vorgestellt werden:

In einem ersten Fertigungsschritt wird das Formteil 10' mit dem dargestellten Umriss aus einem biegbaren Rohmaterial herausgetrennt (bspw. durch einen Stanzvorgang). In einem zweiten Fertigungsschritt werden die Ausstanzungen 11 aus dem Formteil 10' herausgetrennt (bspw. ebenfalls durch einen Stanzvorgang). Der erste und der zweite Fertigungsschritt können auch in einem Fertigungsschritt zusammengefasst werden, indem der Umriss des Formteils 10' und die Aussparung 11 gleichzeitig herausgetrennt werden.

Danach werden die Schenkelflächen des Formteils 10' entlang der Biegelienen 12 in dieselbe Richtung gebogen (bspw. durch Schwenkbiegen), so dass ein Behälter 10 entsteht.

Zur Abdichtung oder Versteifung des Behälters 10 können nun die aneinander angrenzenden Seitenwände (10b, 10c, 10d, 10e) des Behälters 10 optional miteinander verschweißt, verlötet oder verklebt werden.

Anschließend wird der Energiespeicher 20 in den Behälter 10 eingeschoben, bis der Energiespeicher 20 vollständig in dem Behälter 10 angeordnet ist und der Deckel 20a die Öffnung 12 des Behälters 10 verschließt.

## Patentansprüche

1. Energiespeichervorrichtung (1) mit
- einem Energiespeicher (20) mit Kühlfinnen (21), und
- einem einteiligen Biegeteil (10), welches
-- als Behälter zur Aufnahme des Energiespeichers (20) ausgebildet ist,
-- Aussparungen (11) aufweist, durch welche die Kühlfinnen (21) hindurchgeführt werden können, und
-- eine Öffnung (12) aufweist, durch welche ein Einschieben des Energiespeichers (20) in das Biegeteil (10) ermöglicht wird, wobei
der Energiespeicher (20) in dem Biegeteil (10) angeordnet ist und die Kühlfinnen (21) durch die Aussparungen (11) hindurchgeführt sind.

2. Energiespeichervorrichtung (1) nach Anspruch 1, wobei die Aussparungen (11) derart ausgebildet sind, dass diese eine Führung für die Kühlfinnen (21) bei dem Einschieben des Energiespeichers (20) in das Biegeteil (10) bilden.

3. Energiespeichervorrichtung (1) nach Anspruch 1-2, wobei die Aussparungen (11) zumindest teilweise eine Sägezahnform aufweisen.

4. Energiespeichervorrichtung (1) nach Anspruch 1-3, wobei der Energiespeicher (20) derart ausgebildet ist, dass er die Öffnung (12) verschließt.
